# EUROPÄISCHE PATENTSCHRIFT

(11) **EP 2 822 754 B1**
(45) Veröffentlichungstag und Bekanntmachung des Hinweises auf die Patenterteilung: **07.09.2016**
(21) Anmeldenummer: 13709365.4
(22) Anmeldetag: 05.03.2013
(51) Int. Cl.: B29C 70/38

(54) **QUERABLEGEN VON FASERN**
METHOD FOR TRANSVERSELY DEPOSITING FIBERS
APPLICATION TRANSVERSALE DE FIBRES

(30) Priorität: 05.03.2012 DE 102012203388
(43) Veröffentlichungstag der Anmeldung: 14.01.2015
(73) Patentinhaber: Voith Patent GmbH, 89522 Heidenheim (DE); Audi AG, 85045 Ingolstadt (DE)
(72) Erfinder: UFER, Jaromir, 80807 München (DE); GÖTTINGER, Marco, 81543München (DE)
(86) Internationale Anmeldenummer: PCT/EP2013/054375
(87) Internationale Veröffentlichungsnummer: WO 2013/131896

(56) Entgegenhaltungen:
- EP-A2- 0 276 169
- WO-A1-2006/060270
- FR-A1- 2 256 017
- US-A1- 2011 203 737

## Beschreibung

Die vorliegende Erfindung betrifft ein Verfahren zum Ablegen von 1-/2-dim. Fasergebilden zu einem 2-/3-dim. Fasergebilde, insbesondere ausgebildet als ein Faser-Kunststoff-Verbund (FKV) oder als ein FKV-Halbzeug, mit einer Produktionsmaschine, umfassend zumindest eine Ablegevorrichtung und zumindest einen Faserträger, wobei die Ablegevorrichtung die 1-/2-dim. Fasergebilde auf den Faserträger ablegt. Des Weiteren betrifft die Erfindung eine Produktionsmaschine zur Herstellung eines 2-/3-dim. Fasergebildes, insbesondere als Faser-Kunststoff-Verbund oder FKV-Halbzeug ausgebildet, gemäß dem vorhergehend genannten Verfahren.

Bei der Herstellung eines Faser-Kunststoff-Verbundes werden Verfahren eingesetzt wie beispielsweise das Automated Fiber Placement (AFP) oder das Automated Tape Laying (ATL). Bei diesen Verfahren werden die 1-/2-dim. Fasergebilde in Form von unidirektionalen Bändern auf eine Oberfläche abgelegt. Die Ablegerichtung der 1-/2-dim. Fasergebilde entspricht bei derartigen Verfahren der Faserrichtung 1-/2-dim. Fasergebilde. Dabei kann unter Umständen eine Vorspannung erforderlich sein, um die Fasern während des Ablegens gestreckt platzieren zu können. Der zuvor beschriebene Prozess des Ablegens kann jedoch bei 3-dim. Geometrien des Faserträgers, auf den die 1-/2-dim. Fasergebilde abgelegt werden, an seine Grenzen stoßen, da abhängig von der Faser-Bandbreite bzw. Tape-Bandbreite und dem Durchmesser der Anpressrolle das Ablegen der 1-/2-dim. Fasergebilde auf gekrümmten Flächen nur bedingt möglich ist.

Aus EP 0276169 A2, US 2011/203737 A1 und WO 2006/060270 A1 sind Verfahren zum Ablegen von querorientierten Faserbändern bekannt. Verwendet werden mit Harz oder Matrixmaterial vorimprägnierte Faserbänder, die auf einem ebenfalls bandförmigen Trägermaterial aufgebracht sind. Somit ist eine gewisse Stabilität des Faserbandes gegeben, so dass sie auf einer Vorratsrolle aufgewickelt und von dieser bei Bedarf wieder abgewickelt werden können. In all diesen Verfahren wird das Faserband beim Ablegen auf den Faserträger mit einer Anpressrolle auf die Oberfläche aufgepresst.

Das Trägerband wird kurz vor oder kurz nach dem Ablegen abgelöst. FRA2256017
A1 offenbart die Merkmale im Oberbegriff des Anspruchs 1.

Die vorliegende Erfindung beschäftigt sich mit der Aufgabe, für ein Verfahren zum Ablegen von 1-/2-dim. Fasergebilden und für eine dieses Verfahren anwendende Produktionsmaschine eine verbesserte oder zumindest eine alternative Ausführungsform anzugeben, die sich insbesondere durch eine breitere Anwendbarkeit beispielsweise auch bei gekrümmten Flächen auszeichnet.

In einem Aspekt der Erfindung wird somit ein Verfahren nach Anspruch 1 zum Ablegen von 1-/2-dim. Fasergebilden zu einem 2-/3-dim. Fasergebilde, insbesondere ausgebildet als ein Faser-Kunststoff-Verbund oder FKV-Halbzeug, mit einer Produktionsmaschine vorgeschlagen, die zumindest eine Ablegevorrichtung und zumindest einen Faserträger aufweist, wobei die 1-/2-dim. Fasergebilde zumindest eine unidirektionale Faserschicht aufweisen. Dabei legt zumindest eine Ablegevorrichtung in Ablegerichtung die 1-/2-dim. Fasergebilde auf zumindest einen Faserträger derart geordnet ab, dass die Faserrichtungen der abgelegten 1-/2-dim. Fasergebilde zur Ablegerichtung einen Winkel α>20° einnehmen. Es können die Faserrichtungen der abgelegten 1-/2-dim. Fasergebilde zur Ablegerichtung auch einen Winkel α>40°, insbesondere α>60° und beispielsweise α>70° einnehmen. Dabei kann der Winkel α einen Maximalwert von 90° annehmen. Somit wird in anderen Worten hinsichtlich des Winkels α immer ein spitzer Winkel oder der rechte Winkel betrachtet. Wobei die 1-/2-dim. Fasergebilde spannungsfrei in Faserrichtung auf dem Faserträger abgelegt werden. Die Ablegevorrichtung hat keinen direkten Kontakt mit dem Faserträger, sondern bildet mit diesem einen Spalt, der eine Breite zwischen 1 mm und 20 mm hat. Zusätzlich weist die Ablegevorrichtung eine Saugvorrichtung auf, mittels der eine die 1-/2-dim. Fasergebilde auf der Ablegevorrichtung fixierende Saugkraft in der Ablegevorrichtung erzeugt wird, wobei zum Ablagezeitpunkt und/oder im Ablagebereich die Saugkraft an der Ablegevorrichtung abgesenkt wird.

Dadurch dass die 1-/2-dim. Fasergebilde nicht als endlose Fasergebilde von der Rolle abgewickelt und unter Spannung abgelegt werden, wie es im Stand der Technik bei Multiaxial-Gelegen der Fall ist, sondern als in Faserrichtung spannungsfreie Abschnitte abgelegt werden, lassen sich auch gekrümmte Oberflächen sehr gut abbilden.

Weiterhin können die 1-/2-dim. Fasergebilde zusätzlich spannungsfrei in Ablegerichtung auf dem Faserträger abgelegt werden.

Dabei versteht man unter einem spannungsfreien Ablegen in Faserrichtung und/oder in Ablegerichtung ein Ablegen von 1-/2-dim. Fasergebilden derart, dass die 1-/2-dim. Fasergebilde während des Ablegens in Faserrichtung und/oder Ablegerichtung nicht unter Spannung stehen. Demzufolge sind die 1-/2-dim. Fasergebilde während des Ablegens nicht vorgespannt, sondern werden beispielsweise ohne Ziehen an den Enden auf dem Faserträger abgelegt. Aufgrund der fehlenden Vorspannung kann nunmehr ein gestrecktes Ablegen der 1-/2-dim. Fasergebilde erreicht werden, ohne dass die 1-/2-dim. Fasergebilde entlang ihrer Faserrichtung und/oder Ablegerichtung gespannt werden müssen. Auch kann vorteilhaft ein Abgleiten der abgelegten Lagen aufeinander und eine damit einhergehende unerwünschte Verschiebung von 1-/2-dim. Fasergebilden in benachbarten oder unteren Lagen beim Ablegen verhindert bzw. reduziert werden. Außerdem können im Vergleich zu einem vorgespannten Ablegen von 1-/2-dim. Fasergebilden höhere Ablageraten erreicht werden, da keine Zugkräfte wirken, die bei einer notwendigen Fixierung der 1-/2-dim. Fasergebilde zu Verschiebungen, Abrissen oder ungewollten Ablösungen von vorfixierten Lagen oder der 1-/2-dim. Fasergebilde untereinander führen können. Zudem kann bei einem spannungsfreien Ablegen der 1-/2-dim. Fasergebilde eine Reduzierung der Zugspannung auf tatsächlich 0 vorgenommen werden, was bei den herkömmlichen Verfahren, die mit Zugspannung arbeiten, nicht möglich ist, da zumindest eine minimale Zugspannung auf die 1-/2-dim. Fasergebilde wirken muss.

Bei herkömmlichem Ablegen von 1-/2-dim. Fasergebilden setzt beispielsweise der Fixierpunkt unterhalb der Pressvorrichtung und die Materialführung der Ablegevorrichtung eine minimale Faserlänge voraus, die üblicherweise 6 bis 30 cm betragen kann. Aufgrund dieser minimalen Faserlänge können insbesondere bei kleinen Bauteilen lokale Verstärkungen innerhalb des Bauteiles nicht realisiert werden. Zudem kann ein erhöhter Verschnitt außerhalb des Bauteils aufgrund der minimalen Faserlänge notwendig sein. Vorteilhaft können durch ein derartiges Querablegen von 1-/2-dim. Fasergebilden, wobei die Faserrichtungen der 1-/2-dim. Fasergebilde zur Ablegerichtung einen Winkel α > 20° einnehmen, 1-/2-dim. Fasergebilde mit einer signifikant reduzierten, minimalen Faserlänge bzw. Fasergebildelänge verwendet werden. Aufgrund der kleinen Faserlängen bzw. Fasergebildelängen kann man eine größere Flexibilität bei der Einbringung von lokalen Verstärkungen und eine Verschnittreduzierung erreichen. Dies wird beispielsweise bei kleinen Automotive-Strukturen im Vergleich zu den großen Strukturen in der Luft- und Raumfahrt immer öfter gefordert, insbesondere um die Herstellungskosten zu reduzieren.

Zudem ist bei einem herkömmlichen Ablegen der 1-/2-dim. Fasergebilde in Faserrichtung aufgrund der Steifigkeit der Fasern in Längsrichtung meist keine definierte Materialführung am Faserende, also zwischen der Anpressvorrichtung und der Drapiervorrichtung, gegeben. Dadurch ist an gerade dieser Position gegebenenfalls kein gezielter Wärmeenergieeintrag möglich, der für eine Fixierung notwendig ist. Dieser bei dem herkömmlichen Ablegen von 1-/2-dim. Fasergebilden auftretende Nachteil kann durch ein Querablegen der 1-/2-dim. Fasergebilde überwunden werden, sodass vorteilhaft auch am Faserende ein notwendiger, gezielter Wärmeenergieeintrag möglich ist und damit eine Konsolidierung bzw. Fixierung der 1-/2-dim. Fasergebilde auch an den Faserenden sichergestellt und reproduziert werden kann.

Unter einem 1-dim. Fasergebilde ist ein Fasergebilde zu verstehen, bei dem die Erstreckung des Fasergebildes in Richtung der Breite und der Höhe gegenüber der Erstreckung des Fasergebildes in Richtung der Länge vernachlässigbar ist. In anderen Worten ist die Erstreckung des Fasergebildes in Richtung der Länge vorherrschend und prägend. Dabei können beide Richtungen Breite oder Höhe im Wesentlichen eine gleiche Erstreckung aufweisen oder eine der beiden Richtungen kann in ihrer Erstreckung gegenüber der anderen signifikant vergrößert sein. Von dem Begriff 1-dim. Fasergebilde sind Fasern, Endlosfasern, Garne, Faserbündel, Faserstränge, Filamente, Filamentbündel, Rovings oder Mischformen umfasst. Bevorzugt können auch gespreizte Fasern oder Rovings abgelegt werden. Die Spreizung kann vorab im Rohmaterial erfolgen oder im Verfahren vor oder während dem Ablegen.

Unter einem 2-dim. Fasergebilde ist ein Fasergebilde zu verstehen, bei dem die Erstreckung des Fasergebildes in Richtung der Höhe gegenüber der Erstreckung des Fasergebildes in Richtung der Länge und der Breite vernachlässigbar ist. In anderen Worten ist die Erstreckung des Fasergebildes in Richtung der Länge und der Breite vorherrschend und prägend. Dabei können beide Richtungen Breite oder Länge im Wesentlichen eine gleiche Erstreckung aufweisen oder eine der beiden Richtungen kann in ihrer Erstreckung gegenüber der anderen signifikant vergrößert sein. Von dem Begriff 2-dim. Fasergebilde sind Gewebe, Gestricke, Gewirke, Vliesstoffe, unidirektionale abgelegte Faserschichten, Multiaxial-Gelege, Matten, Maschenwaren, Abstandsgewebe, Geflechtschläuche, Stickereien, Nähzeuge, Abreißgewebe oder Mischfomen umfasst.

Allen 2-dim. Fasergebilden, die als 1-/2-dimensionales Fasergebilde bei der Produktion eingesetzt werden, ist jedoch gemein, dass sie zumindest eine unidirektionale Faserschicht aufweisen. So kann beispielsweise zur Ausbildung eines verwendbaren 2-dim. Fasergebildes auf einen Vliesstoff eine unidirektionale Faserschicht aufgebracht sein. Ein Multiaxial-Gelege weist beispielsweise mehrere unidirektionale Faserschichten auf, wobei die Faserorientierungen in den einzelnen Faserschichten zueinander verdreht sind. Die 1-/2-dimensionalen Fasergebilde, die abgelegt werden, sind aber so aufgebaut, dass alle Fasern eine Faserrichtung aufweisen, die im oben genannten Winkelbereich zur Ablegerichtung liegt. Bevorzugt besteht das 1-/2-dimensionale Fasergebilde nur aus einer oder mehreren unidirektionalen Schichten. Besonders bevorzugt haben alle Fasern, die in einem 1-/2-dimensionalen Fasergebilde abgelegt werden, im Wesentlichen die gleiche Faserrichtung.

Unter einem 3-dim. Fasergebilde ist ein Fasergebilde zu verstehen, dessen Erstreckung in Richtung der Länge, der Breite und der Höhe gegenüber keiner der Richtungen vorherrschend ist. Dabei können alle Richtungen im Wesentlichen eine gleiche Erstreckung aufweisen oder eine oder zwei der drei Richtungen kann oder können in ihrer Erstreckung gegenüber den anderen oder der anderen signifikant vergrößert sein. Von dem Begriff 3-dim. Fasergebilde sind im Wesentlichen mehrere aufeinander geschichtete 2-dim. Fasergebilde zu verstehen. Dabei können die 2-dim. Fasergebilde unterschiedlich ausgebildet sein. So ist es denkbar, dass beispielsweise eine unidirektionale Faserschicht von einem Vliesstoff als nächste Schicht gefolgt wird während ein Gewebe das 3-dim.

Fasergebilde abschließen kann. Es können aber auch ausschließlich unidirektionale 2-dimensionale Fasergebilde zum Aufbau eines 3-dim. Fasergebildes verwendet werden. Dabei können die unidirektionalen 2-dim. Fasergebilde gleich orientiert oder unterschiedlich orientiert hinsichtlich ihrer Richtung sein. In Letzterem Fall liegt ein Multiaxial-Gelege vor.

Ein Faser-Kunststoff-Verbund besteht im Wesentlichen aus zumindest einem 1-/2- oder 3-dim. Fasergebilde, das in eine Kunststoff-Matrix eingebettet ist. Dabei wird das zumindest eine 1-/2- oder 3-dim. Fasergebilde von der Kunststoff-Matrix umgeben, die durch Adhäsiv- oder Kohäsivkräfte an das zumindest eine 1-/2- oder 3-dim. Fasergebilde gebunden ist. Als Materialien für Fasergebilde können Glasfasern, Kohlenstofffasern, Aramidfasern, PBO-Fasern, Polyethylenfasern, Naturfasern, Basaltfasern, Quarzfasern, Aluminiumoxidfasern, Siliziumcarbidfasern oder Mischformen zum Einsatz kommen. Als Materialien für die Matrix können Duroplaste (insbesondere gesättigte oder ungesättigte Polyesterharze, Epoxidharze, Vinylesterharze), Thermoplaste, Elastomere oder Mischformen zum Einsatz kommen, ggf. auch zusätzlich mit Füllstoffen.

Unter einem FKV-Halbzeug ist ein 2-/3-dimensionales Fasergebilde zu verstehen, dass als Preform, Vorform, Vorformling, Prepreg oder Mischform für einen Faser-Kunststoff-Verbund fungiert. Aus dem FKV-Halbzeug kann durch Applikation der Matrix bzw. des Matrixmaterials in oder auf das FKV-Halbzeug und durch beispielsweise nachfolgendes Verpressen der Faser-Kunststoff-Verbund hergestellt werden. Dabei kann das FKV-Halbzeug Kunststoffe aufweisen, die als Binder, Bindemittel, Imprägnierungsmittel, Haftvermittler oder Mischformen wirken. Mittels beispielsweise dieser Kunststoffe kann das FKV-Halbzeug in Form gehalten werden, so dass ein Verschieben der Fasergebilde zueinander beispielsweise bei Transport weitestgehend vermieden werden kann. Es ist auch denkbar, dass das FKV-Halbzeug als Faser-Matrix-Halbzeug ausgebildet ist. In diesem Falle ist das 2-/3-dimensionales Fasergebilde mit Matrixmaterial imprägniert, wobei das Matrixmaterial zumindest teilweise polymerisiert ist. Dabei hat das Matrixmaterial in dem Faser-Matrix-Halbzeug eine fixierende Funktion, so dass ein Verschieben der Fasergebilde bzw. Faserschichten zueinander gegebenenfalls bei der Weiterverarbeitung zumindest verringert ist.

Unter einer Ablegevorrichtung ist eine Vorrichtung zu verstehen, die die 1-/2-dim. Fasergebilde auf einen Faserträger ablegt, wobei der Faserträger beispielsweise einen Werkzeugtisch, ein Förderband, ein Endlossieb, einen Endlosfilz, eine Werkzeughälfte eines Presswerkzeuges, eine Walze, besaugt oder elektrostatisch aufladbar oder dergleichen darstellen kann. Der Faserträger kann dabei jede beliebige Maschinenkomponente sein, auf den die 1-/2-dim. Fasergebilde mittels der Ablegevorrichtung abgelegt werden. Die Ablegevorrichtung kann dabei beispielsweise ein Förderband, ein Endlossieb, einen Endlosfilz, eine Walze, besaugt oder elektrostatisch aufladbar oder dergleichen darstellen.

Unter der Ablegerichtung ist die Richtung zu verstehen, unter der die Ablegevorrichtung relativ zum Faserträger die 1-/2-dim. Fasergebilde auf dem Faserträger ablegt. Dabei kann sich die Ablegevorrichtung entlang des Faserträgers bewegen, beispielsweise im Falle einer, insbesondere trichterförmigen, Breitschlitzdüse, mittels der die 1-/2-dim. Fasergebilde auf dem Faserträger abgelegt werden. Es ist aber auch denkbar, dass sich der Faserträger, beispielsweise ausgebildet als ein Förderband, bewegt, während die Ablegevorrichtung stationär ausgebildet ist. Oder es ist möglich, dass sowohl die Ablegevorrichtung als auch der Faserträger beweglich ausgebildet sind, wie beispielsweise im Falle von zwei Förderbändern, wobei das eine Förderband die 1-/2-dim. Fasergebilde auf das andere Förderband ablegt.

Unter einer Faserrichtung ist die Faserorientierung der einzelnen Fasern oder Filamente in den 1-/2-dim. Fasergebilden zu verstehen. Dabei kann die Faserrichtung bei 1-dim. Fasergebilden der Längsrichtung des 1-dim. Fasergebildes entsprechen, wenn die Fasern in Längsrichtung in dem 1-dim. Fasergebilde angeordnet sind. Dabei entspricht bei gestreckten Fasern die Faserorientierung im Wesentlichen der Längsrichtung der Fasern bzw. Filamente.

Unter einer unidirektionalen Faserschicht versteht man ein 2-dim. Fasergebilde, bei dem alle Fasern parallel zueinander orientiert sind. In einer unidirektionalen Faserschicht weisen somit alle Fasern die gleiche Faserorientierung bzw. Faserrichtung auf.

Die Faserrichtung der abgelegten 1-/2-dim. Fasergebilde in dem 2-/3-dim. Fasergebilde ist zu der Ablegerichtung unter einem Winkel α>0° angeordnet. Dieser Winkel α kann für alle 1-/2-dim. Fasergebilde den gleichen Wert aufweisen. Wird beispielsweise die Ablegerichtung der Ablegevorrichtung während des Ablegens variiert, so können die Faserrichtungen der abgelegten 1-/2-dim. Fasergebilde unter unterschiedlichen Winkeln α zur Ablegerichtung orientiert sein. Dabei können auch eine vorbestimmte Anzahl von 1-/2-dim. Fasergebilden parallel zur Ablegerichtung mit ihrer Faserrichtung positioniert sein und somit unter einem Winkel α=0°. Jedoch sind auch in diesem Fall die Faserrichtungen zumindest eines Anteils der 1-/2-dim. Fasergebilde unter einem Winkel von α>0° zur Ablegerichtung positioniert.

Vorteilhaft kann durch ein derartiges Querablegen die Qualität der Faser-Kunststoff-Verbunde bzw. der FKV-Halbzeuge unter anderem aufgrund der definierten Faserende-Fixierung verbessert werden. Zudem kann dadurch eine höhere Ablagerate erreicht werden und zudem ist ein gewünschtes Eigenschaftsprofil des Preforms flexibler herstellbar.

Dabei versteht man unter Eigenschaftsprofil das Materialverhalten des fertigen Faser-Kunststoff-Verbundes wie beispielsweise ein Steifigkeitsprofil oder ein Festigkeitsprofil.

Weiterhin können die 1-/2-dim. Fasergebilde auch mehrere unidirektionale Faserschichten aufweisen. Vorteilhaft kann bei der Verwendung von 1-/2-dim. Fasergebilden mit mehreren unidirektionalen Faserschichten eine größere Menge an abgelegtem Fasermaterial erreicht werden.

Des Weiteren können die 1-/2-dim. Fasergebilde aus mehreren unidirektionalen Faserschichten bestehen. Werden lediglich unidirektionale Faserschichten verwendet, so sind gezielte Eigenschaftsprofile herstellbar, die nicht durch Faserwirrlagen oder unerwünschte Faserorientierungen gestört werden.

Weiterhin können die 1-/2-dim. Fasergebilde als Multiaxial-Gelege ausgebildet sein. Auch bei Multiaxial-Gelegen sind gezielte Eigenschaftsprofile herstellbar, die nicht durch Faserwirrlagen oder unerwünschte Faserorientierungen gestört werden.

Des Weiteren können die 1-/2-dim. Fasergebilde aus einer unidirektionalen Faserschicht bestehen. Je Auftrag einer unidirektionalen Faserschicht kann das Eigenschaftsprofil in die gewünschte Richtung gelenkt werden und dadurch ist eine flexible, individuelle Anpassung des Eigenschaftsprofils während der Produktion möglich.

Weiterhin können die 1-/2-dim. Fasergebilde als ein Strang zueinander verbunden sein, wobei die einzelnen 1-/2-dim. Fasergebilde die Strangabschnitte ausbilden und wobei die Faserrichtungen der 1-/2-dim. Fasergebilde unter einem Winkel >40° zur Längsrichtung des Stranges angeordnet sind.

Somit können die einzelnen 1-/2-dim. Fasergebilde, aus denen das 2-/3-dim. Fasergebilde ausgebildet wird, auch in Form eines Stranges, beispielsweise durch zumindest bereichweise aufgebrachtes Bindemittel oder Matrixmaterial, miteinander verbunden sein. Dabei werden die einzelnen Strangabschnitte des Stranges durch die 1-/2-dim. Fasergebilde aufgebaut, wobei die Faserrichtungen der Strangabschnitte bzw. 1-/2-dimensionalen Fasergebilde unter einem Winkel >40° zur Längsrichtung des Stranges angeordnet sind. Dabei wird als Winkel ein spitzer Winkel oder der rechte Winkel vermessen. Vorteilhaft kann dadurch beispielsweise der Strang ungespannt auf den Faserträger abgelegt werden. Etwaige Wellenbildung des Stranges in Ablegerichtung führen dabei nicht zu einem Ondulieren oder Abknicken der Fasern bzw. Filamente bei nachfolgendem Verpressen, da die Fasern aufgrund ihrer gleichen Faserorientierung lediglich übereinander abgelegt werden.

Des Weiteren können die 1-/2-dim. Fasergebilde vor und/oder während und/oder nach dem Ablegen mit einem Bindemittel oder Matrixmaterial derartig vorbehandelt werden, dass sie untereinander und/oder an/auf dem Faserträger haften.

Durch die Verwendung eines Bindemittels kann vorteilhaft ein Verschieben der 1-/2-dim. Fasergebilde oder sogar der unterschiedlichen Lagen zueinander verringert bzw. verhindert werden, sodass während dem Ablegen ein positionsgenaues Ablegen ohne ein darauffolgendes Verrutschen möglich ist. Demzufolge sind die einzelnen Faserschichten oder -lagen reproduzierbar in der gewünschten Positionierung und mit dem gewünschten Eigenschaftsprofil herstellbar. Als Bindemittel können dabei duroplastische oder thermoplastische Kunststoffe verwendet werden. Dabei kann als Bindemittel auch direkt Matrixmaterial verwendet werden.

Des Weiteren kann der Faserträger eine erste Werkzeughälfte mit einem Oberflächenprofil aufweisen, das den mit dem Verfahren herstellbaren Faser-Kunststoff-Verbund oder das mit dem Verfahren herstellbare FKV-Halbzeug während eines Konsolidierungsvorganges profiliert.

Vorteilhaft kann durch eine erste Werkzeughälfte in einer Produktionsmaschine sowohl das Ablegen der 1-/2-dim. Fasergebilde als auch deren Konsolidierung bzw. Teilkonsolidierung zu einem Faser-Kunststoff-Verbund oder FKV-Halbzeug vorgenommen werden, was zudem den Produktionsprozess vereinfacht und die Produktionsgeschwindigkeit erhöht. Dabei versteht man unter einem Konsolidierungsvorgang einen Vorgang, bei dem die Faserschichten bzw. Faserlagen zueinander zumindest teilweise fixiert werden und die Endkontur bzw. das Endprofil zumindest endkonturnah bzw. endprofilnah ausgebildet wird. Dabei kann die Werkzeughälfte auch mehrteilig ausgebildet sein. Dadurch ist vorteilhaft, beispielsweise durch Auswechseln einzelner Bauteile der Werkzeughälfte, eine höhere Flexibilität und Variation der Oberflächenprofile möglich.

Weiterhin kann eine Halteeinrichtung vorgesehen sein, die mehrere Haltelemente umfassen kann.
Vorteilhaft kann durch das Vorsehen einer derartigen Halteeinrichtung mit mehreren Halteelementen ein Abrutschen der 1-/2-dim. Fasergebilde auf beispielsweise gekrümmten Oberflächen bzw. Oberflächenprofilen weitestgehend verringert werden, sodass auch bei derartigen gekrümmten Oberflächenprofilen die Ausbildung eines exakten und reproduzierbaren Eigenschaftsprofils des Faser-Kunststoff-Verbundes möglich wird. Dabei können die Halteelemente die auf dem Faserträger abgelegten 1-/2-dim. Fasergebilde positionieren, sodass auch bei gekrümmten Oberflächen und Oberflächenprofilen ein einigermaßen exaktes Ablegen der 1-/2-dim. Fasergebilde ohne nachträgliches Verrutschen möglich ist. Dabei können die Halteelemente derartig ausgebildet sein, dass sie in dem Faserträger versenkt werden können. Dabei kann die Halteeinrichtung beispielsweise igelartig ausgebildet sein und demzufolge mehrere Stacheln, Dornen oder dergleichen aufweisen oder es ist denkbar, dass die Halteelemente in Form von Stacheln, Dornen oder anderweitigen Begrenzungselementen auf das Oberflächenprofil des Faserträgers absenkbar sind, sodass ein Abrutschen oder Verrutschen der 1-/2-dim. Fasergebilde während des Ablegens verhindert wird. Vorteilhaft kann aufgrund einer derartigen Halteeinrichtung ggf. auf Bindemittel verzichtet werden oder der Anteil an benötigtem Bindemittel reduziert werden.

Des Weiteren kann zumindest eine Vorrichtung vorgesehen sein, die eine auf die 1-/2-dim. Fasergebilde wirkende Haftkraft erzeugt, mittels der die 1-/2-dim. Fasergebilde auf dem jeweiligen Bauteil der Produktionsmaschine gezielt gehalten werden können.

Mittels einer derartigen Haftkraft kann vorteilhaft vermieden werden, dass die 1-/2-dim. Fasergebilde sich unkontrolliert von dem jeweiligen Bauteil der Produktionsmaschine ablösen.

Des Weiteren kann der Faserträger eine Saugeinrichtung aufweisen, mittels der eine die abgelegten 1-/2-dim. Fasergebilde auf dem Faserträger fixierende Saugkraft in dem Faserträger erzeugt wird.

Einmal abgelegt können demzufolge vorteilhaft die Fasergebilde mittels der Saugkraft exakt auf dem Faserträger fixiert werden und es kann vermieden werden, dass ein Verrutschen der 1-/2-dim. Fasergebilde zueinander nach dem Ablegen auftritt. Eine derartige Saugeinrichtung kann eine Vakuumpumpe oder dergleichen sein, mit der in dem Faserträger ein Vakuum erzeugt wird, aufgrund dessen die abgelegten 1-/2-dim. Fasergebilde auf dem Faserträger beispielsweise über einem Lochblech oder einem Langlochblech oder dergleichen fixiert werden können.

Weiterhin kann der Faserträger eine elektrische Polarisierungsvorrichtung aufweisen, mittels der eine, die abgelegten 1-/2-dim. Fasergebilde auf dem Faserträger fixierende, elektrostatische Anziehungskraft erzeugt wird.

Sind dabei die 1-/2-dim. Fasergebilde entgegengesetzt zum Faserträger geladen, so haften die 1-/2-dim. Fasergebilde aufgrund einer elektrostatischen Anziehungskraft auf dem Faserträger. Dadurch kann vorteilhaft ein Verrutschen der 1-/2-dim. Fasergebilde nach dem Ablegen aufgrund der elektrostatischen Anziehungskräfte verringert bzw. verhindert werden.

Des Weiteren kann der Faserträger eine Heizvorrichtung aufweisen, die die abgelegten 1-/2-dim. Fasergebilde auf eine vorbestimmte Temperatur erwärmen.

Vorteilhaft kann durch die Erwärmung auf eine vorbestimmte Temperatur beispielsweise ein Bindemittel, das auf und/oder in den 1-/2-dim. Fasergebilden appliziert ist, aktiviert werden und dazu führen, dass die 1-/2-dim. Fasergebilde aneinander haften oder untereinander verkleben, wobei dadurch zumindest eine Teilkonsolidierung der 1-/2-dim. Fasergebilde zueinander möglich wird. Beispielsweise ist es auch denkbar, dass die 1-/2-dim. Fasergebilde derartig erwärmt werden, dass ein nachfolgendes Aufheizen beispielsweise während eines Konsolidierungsvorganges schneller vonstattengehen kann, sodass die Prozessgeschwindigkeit erhöht werden kann. Somit kann die vorbestimmte Temperatur beispielsweise eine Schmelz- oder Anschmelztemperatur des Bindemittels sein oder eine Temperatur, die maximal 10%, insbesondere maximal 20%, gegebenenfalls maximal 30% oder beispielsweise maximal 40%, unterhalb der Konsolidierungstemperatur angesiedelt ist.

Weiterhin kann der Faserträger zumindest ein erstes Förderband aufweisen, mittels dem die 1-/2-dim. Fasergebilde nach dem Ablegen in Bandlaufrichtung weiter transportiert werden.

In einer derartigen Ausbildungsform können vorteilhaft aufgrund des ersten Förderbandes endlose Faser-Kunststoff-Verbunde oder endlose FKV-Halbzeuge erzeugt werden. Somit kann die Ablegevorrichtung die 1-/2-dim. Fasergebilde mit dementsprechend gewünschter Faserrichtung auf dem ersten Förderband ablegen, wobei das erste Förderband fortwährend die abgelegten 1-/2-dim. Fasergebilde vom Ablegeort zu weiteren Bereichen der Produktionsmaschine transportiert, in denen beispielsweise die 1-/2-dim. Fasergebilde fertig konsolidiert werden können.

Dabei kann die Bandlaufrichtung von zumindest einem ersten Förderband unter einem vorbestimmten Winkel β zu der Bandlaufrichtung zumindest eines weiteren ersten Förderbandes orientiert sein.

Nehmen mehrere erste Förderbänder unterschiedliche vorbestimmte Winkel β zueinander ein, so kann in einem Endlosprozess ein mehrschichtiger, in den Faserschichten unterschiedliche Faserrichtungen aufweisender Faser-Kunststoff-Verbund bzw. FKV-Halbzeug hergestellt werden. Ein derartiges Verfahren wäre gegebenenfalls vorteilhaft bei einem Herstellungsverfahren für Organobleche anwendbar.

Es können auch mehrere erste Förderbänder verwendet werden, die beispielsweise analog zur Herstellung von mehrlagigen Papieren mehrere Lagen eines FKV-Halbzeuges mittels vorhergehend beschriebener Technik herstellen, wobei diese einzelnen Lagen in einer Produktionsmaschine zu einem mehrlagigen Faser-Kunststoff-Verbund oder FKV-Halbzeug durch beispielsweise Verpressen oder Vergautschen konsolidiert bzw. teilkonsolidiert werden.

Des Weiteren kann die Ablegevorrichtung eine erste, insbesondere trichterförmige, Breitschlitzdüse aufweisen, mittels der die 1-/2-dim. Fasergebilde auf dem Faserträger aufgebracht werden.

Mittels dieses sehr einfach ausgebildeten Bauteils kann vorteilhaft ein einfaches Auftragen der 1-/2-dim. Fasergebilde auf dem Faserträger vorgenommen werden. Zudem kann aufgrund der Orientierung des Schlitzes der Breitschlitzdüse eine einfache Einstellung der Faserrichtung vorgenommen werden. Die Breitschlitzdüse nimmt Fasern oder Rovingabschnitte beispielsweise über eine trichterförmige Zuführung auf und richtet diese parallel zur Längsachse der Öffnung der Breitschlitzdüse aus. Die Öffnung ist quer zur Faserrichtung bevorzugt zwischen 1 und 20 mm breit. In Faserrichtung ist sie etwas länger als die Faserlänge. Die Faserlänge beträgt bevorzugt zwischen 10 und 2000 mm, besonders bevorzugt 20 bis 300 mm. Diese Angaben sind auch für die anderen Ablegevorrichtungen bevorzugt.

Des Weiteren kann eine zweite, insbesondere trichterförmige, Breitschlitzdüse vorgesehen sein, mittels der die 1-/2-dim. Fasergebilde auf ein Bauteil der Ablegevorrichtung aufgebracht werden.

Somit kann beispielsweise mittels der zweiten trichterförmigen Breitschlitzdüse eine grobe Auftragung der 1-/2-dim. Fasergebilde auf ein Bauteil der Ablegevorrichtung vorgenommen werden, während mittels dem dementsprechenden Bauteil der Ablegevorrichtung eine exaktere Positionierung der 1-/2-dim. Fasergebilde auf dem Faserträger durchgeführt wird. Vorteilhaft kann aufgrund dieses zweistufigen Verfahrens eine höhere Exaktheit bei der Ablegung der 1-/2-dim. Fasergebilde erreicht werden, so dass die gewünschten Eigenschaftsprofile exakter und reproduzierbarer hergestellt werden können.

Weiterhin kann die Ablegevorrichtung eine Positioniervorrichtung aufweisen, mittels der die Ablegevorrichtung derart zum Faserträger positioniert werden kann, dass unterschiedliche Winkel α eingestellt werden können.

Vorteilhaft kann aufgrund einer derartigen Verstellbarkeit der Ablegevorrichtung eine unterschiedliche Faserrichtung mit ein und derselben Ablegevorrichtung erreicht werden. Dabei kann während eines Prozessschrittes der Winkel α konstant gehalten werden, so dass in verschiedenen Prozessschritten unterschiedliche aber konstante Winkel α eingestellt sind. Es ist aber auch denkbar, dass während eines Prozessschrittes der Winkel α variiert wird, so dass innerhalb eines Prozessschrittes beispielsweise bei der Ausbildung einer Faserschicht die Faserrichtung der einzelnen 1-/2-dim. Fasergebilde in gewünschter Art und Weise und nach voreingestellten Regeln variiert wird. Vorteilhaft kann dadurch eine höhere Flexibilität und Variabilität der einstellbaren Faserrichtungen innerhalb nur einer Produktionsmaschine und sogar innerhalb nur eines Prozessschrittes vorgenommen werden.
Des Weiteren kann die Ablegevorrichtung eine Vortriebseinrichtung aufweisen, mittels der die Ablegevorrichtung in Ablegerichtung während des Ablegens voran bewegt wird.
So kann beispielsweise vorteilhaft der Faserträger stationär ausgebildet sein und die Ablegevorrichtung aufgrund ihrer Vortriebseinrichtung sich relativ zu einem stationären oder beweglich ausgebildeten Faserträger in Ablegerichtung der 1-/2-dim. Fasergebilde voran bewegen. Dadurch kann die Produktionsmaschine konstruktiv einfacher ausgebildet werden und der Verschleiß aufgrund der reduzierten Anzahl von beweglichen Teilen verringert werden.
Des Weiteren ist es möglich, dass die Ablegevorrichtung ein Magazin aufweist, in dem die 1-/2-dim. Fasergebilde bevorratet sind und aus dem dieselben auf den Faserträger und/oder auf ein Bauteil der Ablegevorrichtung abgestreift werden können.
Ein derartiges Abstreifen kann beispielsweise derart verstanden werden, wie das Ziehen einer Spielkarte aus einem Kartenmagazin. Demzufolge kann das Magazin mit seiner Öffnung zu dem dementsprechenden Bauteil der Produktionsmaschine orientiert sein und aufgrund von Relativbewegungen zueinander können die in dem Magazin gestapelten 1-/2-dim. Fasergebilde auf das jeweilige Bauteil abgestreift werden. Vorteilhaft kann durch eine derartig einfache Ausgestaltung eine einfache Bevorratung der 1-/2-dim. Fasergebilde in der Produktionsmaschine erreicht werden, die zudem einfach aufgefüllt werden kann. Zudem ist es möglich, dass die 1-/2-dim. Fasergebilde lediglich aufgrund der Relativbewegung des Magazins zu dem jeweiligen Bauteil auf dem Faserträger oder auf dem jeweiligen Bauteil der Ablegevorrichtung abgelegt werden können.

Des Weiteren aufweist die Ablegevorrichtung eine Saugeinrichtung, mittels der eine die abgelegten 1-/2-dim. Fasergebilde auf der Ablegevorrichtung fixierende Saugkraft in der Ablegevorrichtung erzeugt wird. Somit können die 1-/2-dim. Fasergebilde vorteilhaft auf der Ablegevorrichtung exakt ausgerichtet werden und dort fixiert und mit dementsprechender analoger Exaktheit auf den Faserträger übertragen werden. Dadurch ist eine hohe Prozesssicherheit und ein exaktes Positionieren der 1-/2-dim. Fasergebilde möglich.

Weiterhin kann die Ablegevorrichtung eine elektrische Polarisierungsvorrichtung aufweisen, mittels der eine, die abgelegten 1-/2-dim. Fasergebilde auf der Ablegevorrichtung fixierende, elektrostatische Anziehungskraft erzeugt wird. Durch eine derartige elektrische Polarisierungsvorrichtung lassen sich die bei der Saugeinrichtung vorhergehend beschriebenen Vorteile verwirklichen. Dabei können die 1-/2-dim. Fasergebilde entgegengesetzt zur Ablegevorrichtung geladen sein.

Des Weiteren kann die Ablegevorrichtung eine Heizvorrichtung aufweisen, mittels der die zum Faserträger hin orientierte Oberfläche des jeweiligen abzulegenden 1-/2-dim. Fasergebildes auf eine vorbestimmte Temperatur erwärmt wird. Aufgrund einer derartigen Erwärmung der 1-/2-dim. Fasergebilde können vorteilhaft funktionelle Bestandteile des 1-/2-dim. Fasergebildes auf der Oberfläche aktiviert werden, so dass beispielsweise die Oberfläche eine gewisse Haft- bzw. Klebewirkung aufweist und dementsprechend besser auf dem abgelegten bzw. positionierten Bereich haftet.

Des Weiteren kann die Ablegevorrichtung zumindest ein zweites Förderband aufweisen, mittels dem die 1-/2-dim. Fasergebilde in Bandlaufrichtung zum Ablegen auf den Faserträger transportiert werden. Vorteilhaft kann durch die Verwendung zumindest eines derartigen zweiten Förderbandes das Ablegen der 1-/2-dim. Fasergebilde endlos ausgestaltet werden, so dass in einem endlosen Vorgang die 1-/2-dim. Fasergebilde von der Ablegevorrichtung auf den Faserträger abgelegt werden können.

Um die 1-/2-dim. Fasergebilde am zweiten Förderband zu halten, kann es von der Innenseite her besaugt sein. Die Ablegevorrichtung kann auch zwei entgegengesetzt zueinander laufende zweite Förderbänder aufweisen, wobei die 1-/2-dim. Fasergebilde zwischen den beiden Förderbändern gehalten werden, bevor sie auf den Faserträger abgelegt werden.

Dabei kann die Bandlaufrichtung von zumindest einem zweiten Förderband unter einem vorbestimmten Winkel γ zu der Bandlaufrichtung zumindest eines weiteren zweiten Förderbandes orientiert sein. Werden demzufolge zumindest zwei zweite Förderbänder verwendet, so kann die Ablegevorrichtung vorteilhaft Faserschichten mit unterschiedlichen vorbestimmten Winkeln γ und demzufolge mit unterschiedlichen Winkeln α in einem Prozessschritt erzeugen.

Es kann aber auch die Bandlaufrichtung von zumindest einem zweiten Förderband unter einem vorbestimmten Winkel δ zu der Bandlaufrichtung zumindest eines ersten Förderbandes orientiert sein. In dem Fall, dass sowohl die Ablagerichtung als auch die Ablegevorrichtung zumindest ein Förderband aufweisen, kann ein endloser Herstellungsprozess für FKV-Halbzeuge oder Faser-Kunststoff-Verbunde aufgebaut werden, wobei zumindest eine Faserschicht eine Faserrichtung unter einem gewünschten Winkel α aufweist. Werden mehrere zweite Förderbänder verwendet, so können mehrschichtige Faser-Kunststoff-Verbunde oder FKV-Halbzeuge erzeugt werden, die Faserschichten mit unterschiedlichem Winkel α aufweisen.

Des Weiteren kann in beliebiger Reihenfolge, zusätzlich oder alternativ, ein Einstellen der jeweiligen Haftkräfte derart vorgenommen werden, dass die jeweilige Haftkraft an der Ablegevorrichtung kleiner ist, als die jeweilige Haftkraft an dem Faserträger. Dabei versteht man unter Haftkräfte beispielsweise die Saugkraft, eine elektrostatische Anziehungskraft, eine Adhäsionskraft oder dergleichen. Vorteilhaft kann durch eine derartige Ausgestaltung der Haftkräfte eine einfache Übertragung der 1-/2-dim. Fasergebilde von der Ablegevorrichtung auf den Faserträger erreicht werden, ohne dass eine aufwändige Regelung notwendig ist.

Weiterhin wird in beliebiger Reihenfolge zusätzlich oder alternativ ein Absenken der jeweiligen Haftkraft an der Ablegevorrichtung zum Ablagezeitpunkt und/oder im Ablagebereich vorgenommen. Vorteilhaft kann durch ein derartiges Absenken,
wobei auch ein Absenken der Haftkraft auf 0 denkbar ist, ein einfaches Ablösen der 1-/2-dim. Fasergebilde während des Ablegens an der Ablegevorrichtung erreicht werden.
Des Weiteren ist auch ein Erhöhen der jeweiligen Haftkraft an den Faserträger zum Ablagezeitpunkt und/oder im Ablagebereich denkbar. Aufgrund eines Erhöhens ist vorteilhaft eine größere Sicherheit bei der Übernahme der 1-/2-dim. Fasergebilde durch den Faserträger von der Ablegevorrichtung gegeben. Somit ist es denkbar, dass vorteilhaft beispielsweise sogar ein regelrechtes Ansaugen der 1-/2-dim. Fasergebilde durch den Faserträger zum Ablagezeitpunkt und/oder im Ablagebereich stattfinden kann.
Des Weiteren kann mittels einer Fixiervorrichtung nach und/oder während des Ablegens der 1-/2-dim. Fasergebilde auf den Faserträger die 1-/2-dim. Fasergebilde zueinander fixiert werden. Vorteilhaft kann durch eine derartige Fixiervorrichtung ein nach dem Ablegen auftretendes Verrutschen der 1-/2-dim. Fasergebilde verringert bzw. verhindert werden.

Weiterhin kann mittels einer Fixiervorrichtung nach und/oder während des Ablegens der 1-/2-dim. Fasergebilde auf den Faserträger die 1-/2-dim. Fasergebilde auf dem Faserträger fixiert werden. Vorteilhaft ist aufgrund der Fixiervorrichtung ein Verrutschen der 1-/2-dim. Fasergebilde auf dem Faserträger verringert bzw. verhindert.

Weiterhin kann die Fixiervorrichtung zumindest eine zweite Werkzeughälfte mit einem zur ersten Werkzeughälfte komplementären Oberflächenprofil aufweisen. Dabei können die Oberflächenprofile der beiden Werkzeughälften im Zusammenwirken miteinander die mit dem Verfahren herstellbaren Faser-Kunststoff-Verbunde oder das mit dem Verfahren herstellbare FKV-Halbzeug während eines Konsolidierungsvorganges zumindest teilweise profilieren oder konsolidieren bzw. teilprofilieren oder teilkonsolidieren. Vorteilhaft kann durch eine derartig integrale Ausbildung eines Werkzeuges, umfassend zwei Werkzeughälften, mit der Produktionsmaschine, innerhalb einer Produktionsmaschine das FKV-Halbzeug bzw. der Faser-Kunststoff-Verbund aus 1-/2-dim. Fasergebilden abgelegt werden und zumindest teilprofiliert werden, so dass eine endkonturnahe Herstellung mittels des Verfahrens bzw. der Produktionsmaschine möglich wird.

Des Weiteren kann die Fixiervorrichtung eine Pressvorrichtung aufweisen, mit der die auf dem Faserträger abgelegten 1-/2-dim. Fasergebilde zueinander und/oder auf dem Faserträger durch Verpressen fixiert werden. Auch aufgrund dieser integrierten Bauweise ist innerhalb eines Verfahrens bzw. innerhalb einer Produktionsmaschine ein Verpressen der abgelegten 1-/2-dim. Fasergebilde möglich. Dadurch kann die Prozessgeschwindigkeit erhöht werden und zudem können Transportwege verringert werden.

Des Weiteren kann die Pressvorrichtung zumindest eine Walze aufweisen, wobei mittels der Walze die Fixierung der auf dem Faserträger abgelegten 1-/2-dim. Fasergebilde zueinander durch Verpressen zwischen der zumindest einen Walze und dem Faserträger durchgeführt wird. Vorteilhaft können beispielsweise durch eine derartige Walze ein Endlosverfahren ausgebildet werden, wobei auf einem ersten Förderband die 1-/2-dim. Fasergebilde abgelegt werden und nach Weitertransport zur Walze mittels derselben verpresst werden können. Dadurch ist eine erhöhte Prozessintegration möglich und zudem können größere Mengen an Faser-Kunststoff-Verbunden oder FKV-Halbzeugen in kürzerer Zeit hergestellt werden.

Dabei kann die zumindest eine Walze auch der Ablegevorrichtung in Ablegerichtung nachfolgend ausgebildet sein. Durch eine derartige Ausbildung der Walze beispielsweise als Abroller, der zudem beheizt sein kann, ist auch bei gekrümmten Oberflächen ein konturnahes Verpressen der 1-/2-dim. Fasergebilde durch eine Walze möglich. Insbesondere kann die Walze eine nachgiebige Oberfläche, z.B. eine Schaumstoffoberfläche, aufweisen. So kann sie sich der Gegenkontur in gewisser Weise anpassen.

Des Weiteren kann die Pressvorrichtung zumindest zwei Walzen aufweisen, wobei die Fixierung der auf dem Faserträger abgelegten 1-/2-dim. Fasergebilde zueinander durch Verpressen zwischen den beiden Walzen durchgeführt werden kann. Vorteilhaft an der zwei-Walzen-Ausführungsform ist ebenfalls die Möglichkeit eines Endlosprozesses, beispielsweise wie er aus den Papiermaschinen bekannt ist. Dabei können die 1-/2-dim. Fasergebilde beispielsweise abgelegt auf Lochsieben oder Lochschlitzsieben, durch zumindest zwei Walzen verpresst werden, wobei die Walzen zusätzlich auch noch beheizt sein können.

Des Weiteren kann die Fixiervorrichtung eine Heizeinrichtung aufweisen, die die abgelegten 1-/2-dim. Fasergebilde durch Erwärmung auf eine vorbestimmte Temperatur zueinander fixieren. Eine derartige Heizeinrichtung kann, wie schon zuvor beschrieben, zumindest eine Walze beheizen oder aufgrund von Wärmestrahlung, Heißluft oder elektrische Beheizung den Wärmeeintrag in die abgelegten 1-/2-dim. Fasergebilde erzeugen. Dabei können durch die Erwärmung in den abgelegten 1-/2-dim. Fasergebilden angeordnete Substanzen aktiviert werden, so dass beispielsweise aufgrund von Klebewirkung, Polymerisation oder Verschmelzen von Kunststoffen die 1-/2-dim. Fasergebilde zueinander fixiert werden. Bevorzugt wird die Heizeinrichtung so betrieben bzw. ausgelegt, dass eine Temperatur im Fasergebilde zwischen 60 und 200°C, bevorzugt zwischen 80 und 140°C erreicht wird. Dadurch wird eine optimale Fixierung eines Binders ermöglicht.

Des Weiteren ist es auch denkbar, dass die Fixiereinrichtung eine Bestrahlungsvorrichtung aufweist, die die abgelegten 1-/2-dim. Fasergebilde durch Bestrahlung zueinander fixiert. Dabei kann als Bestrahlung Infrarotstrahlung, UV-Strahlung, Laserstrahlung, Maserstrahlung, ein Induktionsfeld punktförmig oder flächig orientiert und positioniert verwendet werden. Vorteilhaft kann aufgrund der Verwendung einer Bestrahlungsvorrichtung die Fixiervorrichtung weiter entfernt von dem Faserträger positioniert werden, so dass auch längere Strecken aufgrund der gegebenenfalls fokussierten Strahlung überwindbar sind, so dass vorteilhaft der Freiraum durch andere Bauteile zumindest zeitweise eingenommen werden kann. Zudem ist mittels beispielsweise einer fokussierten Bestrahlungseinrichtung der Wärmeeintrag vorteilhaft punktgenau möglich, so dass nur bestimmte Punkte in den abgelegten 1-/2-dim. Fasergebilden fixiert werden, so dass aufgrund der nur teilweisen Fixierung ein nachträgliches Umformen beispielsweise des FKV-Halbzeuges möglich bleibt.

Des Weiteren kann die Fixiervorrichtung eine Sprühvorrichtung aufweisen, die die abgelegten 1-/2-dim. Fasergebilde durch Besprühen mit einem Bindemittel oder Matrixmaterial zueinander fixiert. Vorteilhaft kann aufgrund einer Sprühvorrichtung das Bindemittel erst nach dem Ablegen der 1-/2-dim. Fasergebilde aufgetragen werden, so dass ein Verkleben oder Anhaften der Fasergebilde während des Ablegens oder davor weitestgehend vermieden werden kann. Zudem ist es möglich, dass mittels der Sprühvorrichtung eine derartig große Menge an Bindemittel oder Matrixmaterial aufgetragen wird, dass ein weiterer Auftrag von Matrixmaterial während des Konsolidierungsvorganges nicht mehr notwendig ist.

Statt der Sprühvorrichtung kann auch eine andere Art von Binderauftragsvorrichtung vorgesehen sein. Insbesondere kann die Fixiervorrichtung sowohl eine Binderauftragsvorrichtung als auch eine Heizeinichtung oder eine Bestrahlungsvorrichtung aufweisen, so dass der Binder aufgetragen und auf den Fasern fixiert wird.

Beim Ablegen mit einer Breitschlitzdüse besteht ein freier Spalt zwischen Ablegevorrichtung und Faserträger, über den hinweg das 1-/2-dim. Fasergebilde abgelegt wird. Ebenso kann beim Ablegen mit einem zweiten Förderband oder einer Walze ein freier Spalt zum Faserträger vorhanden sein. Im Ablegebereich muss kein Kontakt zwischen Ablegevorrichtung und Faserträger vorhanden sein. Beispielsweise kann im Ablegebereich der Ablegevorrichtung ein im Bereich der Zuführung vorhandenes Vakuum unterbrochen werden oder sogar im Ablegebereich auf Ausblasen gewechselt werden, um das Fasergebilde auf den Faserträger zu übertragen. Die Höhe des freien Spalts kann bevorzugt zwischen 1 mm und 50 mm liegen.

Insbesondere wenn mit einem freien Spalt, wie oben beschrieben, abgelegt wird, kann es vorteilhaft sein, eine nachfolgende Walze als Fixiervorrichtung vorzusehen, welche die abgelegten Fasergebilde an den Faserträger andrückt und optional beheizt sein kann. Eine Walze als Fixiervorrichtung und/oder als Ablegevorrichtung hat bevorzugt einen Durchmesser der zwischen 10 und 100 mm liegt.

Um die Enden des 1-/2-dim. Fasergebildes nicht in einer Flucht abzulegen, so dass ein weniger abrupter Übergang im Randbereich entsteht, kann die Ablegevorrichtung relativ zum Faserträger seitlich alternierend verschoben werden. Dadurch werden die 1-/2-dim. Fasergebilde seitlich alternierend zu einander versetzt abgelegt. Die Verschiebung kann durch eine seitliche Bewegung der Ablegevorrichtung oder des Faserträgers realisiert werden. Alternativ können die 1-/2-dim. Fasergebilde der Ablegevorrichtung so zugeführt werden, dass sie seitlich alternierend verschoben von dieser aufgenommen und auf den Faserträger übertragen werden.

Weiterhin ist es vorteilhaft zur Herstellung größerer Flächen oder bei einer stärker ausgeprägten 3-D-Topografie auf dem Faserträger, wenn mehrere Streifen von 1-/2-dim. Fasergebilden nebeneinander abgelegt werden. Die Streifen können unterschiedliche Winkel der jeweiligen Faserrichtung zur Ablegerichtung, aber immer im genannten Winkelbereich, aufweisen. Das erfindungsgemäße Verfahren wird dabei mehrmals hintereinander für die einzelnen Streifen angewandt.

Bei allen erfindungsgemäßen Ausführungen ist es vorteilhaft, wenn die Förderrichtung der Zuführung der 1-/2-dim.Fasergebilde zur Ablegevorrichtung im Wesentlichen senkrecht zur Faserrichtung der 1-/2-dim. Fasergebilde ausgerichtet ist.

Weitere wichtige Merkmale und Vorteile der Erfindung ergeben sich aus den Unteransprüchen, aus den Zeichnungen oder aus der zugehörigen Figurenbeschreibung anhand der Zeichnungen. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: ein Ablegen von 1-/2-dim. Fasergebilden mit einer zu einer Ablegerichtung unterschiedlichen Faserrichtung,
- Fig. 2: ein Ablegen von 1-/2-dim. Fasergebilden mittels einer bewegten Ablegevorrichtungund einem stationären Faserträger,
- Fig. 3: mögliche Faserpositionierungen und -orientierungen.
- Fig. 4: Seitlich alternierend abgelegte 1-/2-dim.Fasergebilde
- Fig. 5: Fasergebilde aus mehreren seitlich nebeneinander abgelegten 1-/2-dim. Fasergebilden

- Fig. 6: Produktionsmaschine mit Walze als Ablegevorrichtung
- Fig. 7: weitere Produktionsmaschine mit Walze als Ablegevorrichtung

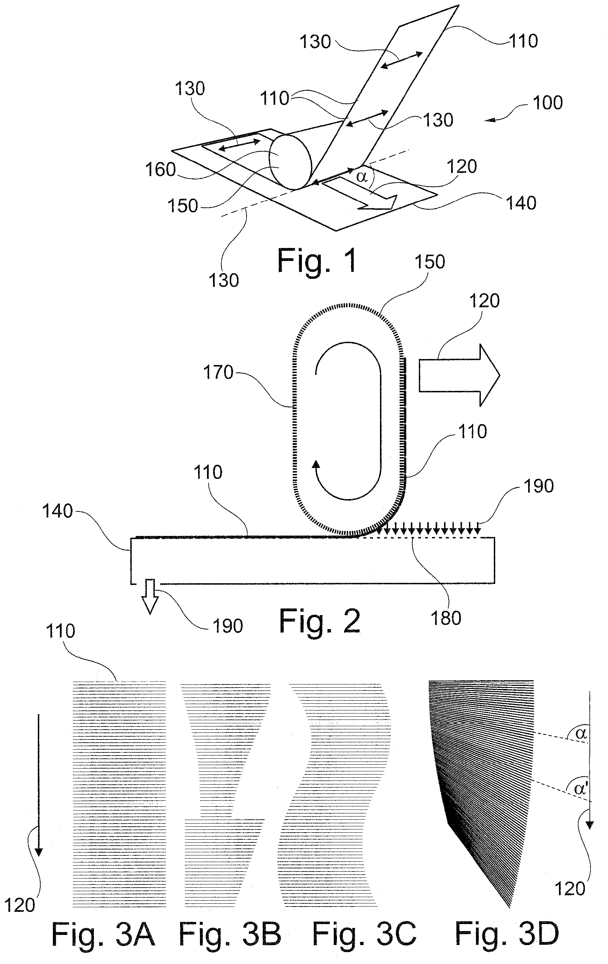

Ein Verfahren 100, wie in Fig. 1 gezeigt, bei dem 1-/2-dim. Fasergebilde 110 zu einer Ablegerichtung 120 quer abgelegt werden, zeichnet sich dadurch aus, dass eine Faserrichtung 130 der abgelegten 1-/2-dim. Fasergebilde 110 zur Ablegerichtung 120 unter einem Winkel α>20° angeordnet sind. Weiterhin sind die 1-/2-dim. Fasergebilde 110 nicht entlang der Ablegerichtung 120 und auch nicht in der Faserrichtung 130 gespannt. Die Spannungsfreiheit in Ablegerichtung 120 kann beispielsweise dadurch umgesetzt werden, dass die einzelnen miteinander zu einem Strang verbundenen 1-/2-dim. Fasergebilde 110 in Richtung eines Faserträgers 140 herabhängen und in diesem herabhängenden Zustand und somit ohne zusätzliche Spannung dem Faserträger 140 zugeführt werden. Sie können aber auch als einzelne 1-/2-dim. Fasergebilde (z.B. als Fasern oder Rovingabschnitte oder Bandabschnitte) mit einer geeigneten Ablegevorrichtung 150 und einer entsprechenden Zuführung, zum Beispiel mit einer Walze und einem besaugten Förderband o.ä., abgelegt werden. Dadurch dass die 1-/2-dim. Fasergebilde nicht als endlose Fasergebilde von der Rolle abgewickelt und unter Spannung abgelegt werden, wie es im Stand der Technik bei Multiaxial-Gelegen der Fall ist, sondern als in Faserrichtung spannungsfreie Abschnitte abgelegt werden, lassen sich auch gekrümmte Oberflächen sehr gut abbilden. Somit werden die 1-/2-dim. Fasergebilde 110 nicht in gespanntem Zustand auf einen Faserträger 140 abgelegt, sondern sie können spannungsfrei unter jedem beliebigem Winkel α zwischen 20° und 90°, durch eine Ablegevorrichtung 150 auf den Faserträger 140 abgelegt werden. Um verschiedene Winkel einzustellen, kann beispielsweise die Ablegevorrichtung 150 gegenüber dem Faserträger 140 schräg angeordnet werden. Es ist auch denkbar, dass die Ablegevorrichtung 150 während des Ablegens immer wieder verdreht oder versetzt wird. Dabei kann zudem eine Fixiervorrichtung 160 vorgesehen sein, die als Walze 160 ausgebildet sein kann.

Zudem kann, wie in Fig. 2 gezeigt, die Ablegevorrichtung 150 in Ablegerichtung 120 bewegt werden. Demzufolge ist eine nicht in Fig. 2 gezeigte Vortriebsvorrichtung zum Bewegen der Ablegevorrichtung 150 vorgesehen. Zudem kann der Faserträger 140 stationär ausgebildet sein, beispielsweise als ein Siebsaugtisch oder dergleichen. Es ist aber auch denkbar, dass der Faserträger 140 als erstes Förderband mit einem Lochsieb ausgebildet ist. Zudem kann die Ablegevorrichtung 150 als ein zweites Förderband 170 ausgebildet sein, wobei sich das Förderband 170 mit seiner Oberfläche auf dem Faserträger 140 abrollt und dabei gleichzeitig die 1-/2-dim. Fasergebilde 110 auf dem Faserträger 140 ablegt. Zudem kann der Faserträger 140 eine Lochstruktur 180 aufweisen, auf der die 1-/2-dim. Fasergebilde 110 mittels einer Saugkraft 190 angesaugt werden. Es ist auch denkbar, dass das Förderband 170 besaugt ausgebildet ist, sodass die 1-/2-dim. Fasergebilde 110 während des Transportes auf dem Förderband 170 mittels einer Saugkraft 190 fixiert werden. Denkbar ist auch, dass ein weiteres zweites Förderband (nicht dargestellt) vorgesehen ist, so dass die 1-/2-dim. Fasergebilde zwischen den beiden zweiten Förderbändern 170 gehalten werden, bevor sie auf dem Faserträger 140 abgelegt werden.

Mit einem derartigen, insbesondere spannungsfreien, Querablegen von 1-/2-dim. Fasergebilden 110 können unter anderem die in den Fig. 3A bis 3D gezeigten Ablagemöglichkeiten von 1-/2-dim. Fasergebilden 110 hergestellt werden. So ist es denkbar, dass gleich lange 1-/2-dim. Fasergebilde 110 parallel zueinander und beispielsweise unter einem vorbestimmten Winkel α zur Ablegerichtung 120 abgelegt werden, wie in Fig. 3A gezeigt. In Figur 3B sind 1-/2-dim. Fasergebilde 110 mit unterschiedlichen Faserlängen abgelegt, wobei der Winkel α nicht verändert wird. In der Figur 3C sind 1-/2-dim. Fasergebilde 110 mit gleicher Faserlänge und/oder gleichem Winkel aber mit unterschiedlicher Positionierung abgelegt. Die Anordnung der 1-/2-dim. Fasergebilde 110, gem. der Fig. 3D, weist zumindest einen im Verlauf der Ablegerichtung 120 veränderlichen Winkel α, α' zur Ablegerichtung 120 aus. Es sind aber auch beliebige andere und Kombinationen von Ablagemöglichkeiten denkbar.

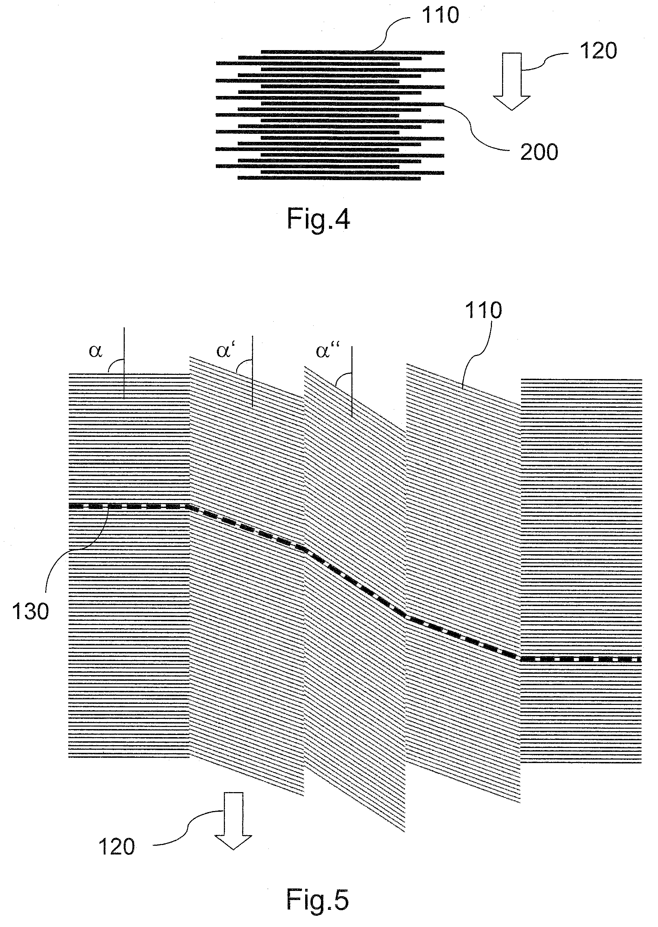

Fig. 4 zeigt eine seitlich alternierende Ablage von 1-/2-dim. Fasergebilden 110. Die einzelnen Fasern bzw. Rovingabschnitte 200 sind in diesem Fall beispielsweise in drei verschiedenen Stufen versetzt abgelegt. Es sind aber auch andere Versetzungsvarianten denkbar. Dadurch wird im seitlichen Bereich ein weniger abrupter Übergang zu den Nachbarbereichen geschaffen.

Fig. 5 zeigt ein Beispiel dafür, wie mehrere Streifen von 1-/2-dim. Fasergebilden 110 nebeneinander abgelegt werden können, so dass eine größere Fläche mit verschiedenen Faserrichtungen 130 abgelegt werden können. Zunächst wird mit dem erfindungsgemäßen Verfahren ein erster Streifen hier mit der Faserrichtung im Winkel α=90° zur Ablegerichtung 120 abgelegt, dann ein zweiter mit einem Winkel α' und ein weiterer mit Winkel α", usw.. Dadurch können auch stärker ausgeprägte 3-D-Topografien oder spezielle Anforderungen an die Faserrichtungen berücksichtigt werden.

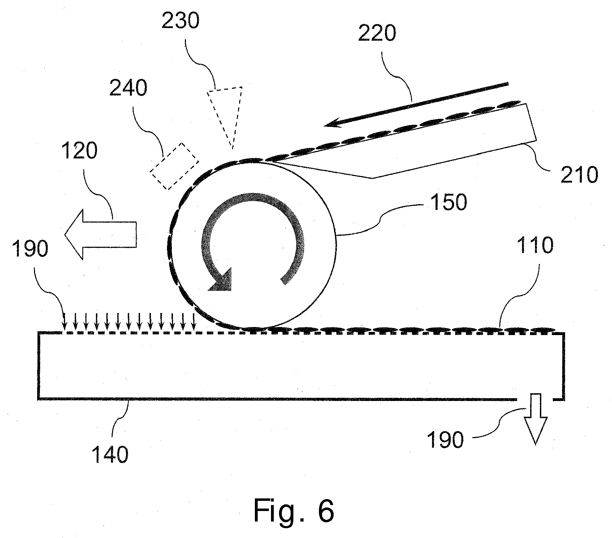

Fig. 6 zeigt eine weitere erfindungsgemäße Ausführung einer Produktionsmaschine mit einer Ablegevorrichtung 150, die eine Walze aufweist. Über eine Zuführeinrichtung 210 werden die Fasern oder Rovingabschnitte in Förderrichtung 220 zugeführt. Mit einer als Walze ausgeführten Ablegevorrichtung 150, die gegebenenfalls besaugt sein kann, werden die 1-/2-dim. Fasergebilde abgelegt auf dem Faserträger 140, der hier wiederum als besaugt dargestellt ist. Alternativ zur Besaugung oder zusätzlich kann eine Binderauftragsvorrichtung 230 vorgesehen sein, die Binder auf die Fasern aufträgt. Eine Heiz- oder Bestrahlungseinrichtung 240 kann als Fixiervorrichtung dafür sorgen, dass die Fasern aneinander und/oder an dem Faserträger 140 haften.

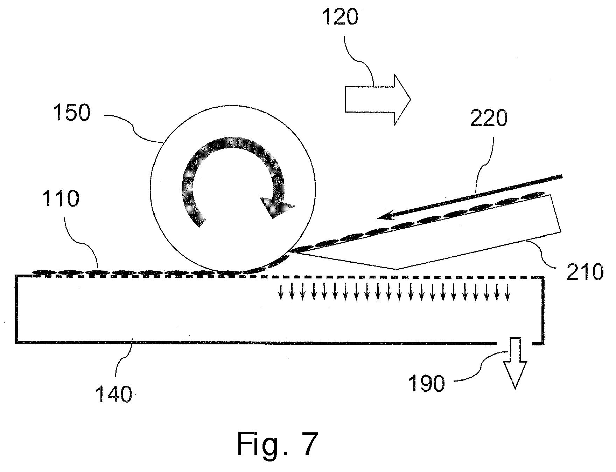

Die Produktionsmaschine in Fig. 7 zeigt eine andere Variante zur Zuführung 210 des Rohmaterials. Die Förderrichtung 220 ist hier entgegengesetzt zur Ablegevorrichtung 120. Die Faserrichtung ist bei all diesen Ausführungsbeispielen als α=90° zur Ablegerichtung 120 dargestellt. Sie kann aber erfindungsgemäß auch im genannten Bereich zwischen 20° und 90° liegen oder wie beschrieben, während des Ablegens verändert werden. Außerdem können alle Merkmale, die bei einer der Ausführungen beschrieben oder dargestellt sind, auch in Verbindung mit den jeweiligen anderen dargestellten Ausführungen erfindungsgemäß angewandt werden.
Auch wenn in diesen Ausführungsbeispielen der Übersichtlichkeit halber nur ebene Faserträger dargestellt sind, läßt sich das erfindungsgemäße Verfahren und die Produktionsmaschine insbesondere sehr vorteilhaft zum Ablegen auf 3-dimensionalen Faserträger anwenden. In allen Varianten kann entweder die Ablegevorrichtung in Ablegerichtung über den Faserträger hinwegbewegt werden oder es kann der Faserträger unter der Ablegevorrichtung entgegen der Ablegerichtung bewegt werden.

## Patentansprüche

1. Verfahren zum Ablegen von 1-/2-dimensionalen Fasergebilden (110) zu einem 2-/3-dimensionalen Fasergebilde, insbesondere ausgebildet als ein Faser-Kunststoff-Verbund (FVK) oder FKV-Halbzeug, mit einer Produktionsmaschine, umfassend zumindest eine Ablegevorrichtung (150) und zumindest einen Faserträger (140), wobei die 1-/2-dimensionalen. Fasergebilde (110) zumindest eine unidirektionale Faserschicht aufweisen, wobei zumindest eine Ablegevorrichtung (150) in Ablegerichtung (120) die 1-/2-dimensionalen Fasergebilde (110) auf zumindest einen Faserträger (140) derart geordnet ablegt, dass die Faserrichtungen (130) der abgelegten 1-/2-dim. Fasergebilde (110) zur Ablegerichtung (120) einen Winkel α>20°, bevorzugt α>60°, und maximal α=90° einnehmen, wobei die 1-/2-dimensionalen Fasergebilde (110) im Wesentlichen spannungsfrei hinsichtlich ihrer Faserrichtung (130) auf dem Faserträger (140) abgelegt werden, **dadurch gekennzeichnet, dass** die Ablegevorrichtung (150) keinen direkten Kontakt mit dem Faserträger (140) hat, sondern mit diesem einen Spalt mit einer Breite zwischen 1 mm und 20 mm bildet,
und wobei die Ablegevorrichtung (150) eine Saugvorrichtung aufweist, mittels der eine die 1-/2-dim. Fasergebilde (110) auf der Ablegevorrichtung (150) fixierende Saugkraft in der Ablegevorrichtung erzeugt wird, wobei zum Ablagezeitpunkt und/oder im Ablagebereich die Saugkraft an der Ablegevorrichtung (150) abgesenkt wird.

2. Verfahren nach Anspruch 1,
wobei die 1-/2-dim. Fasergebilde (110) zumindest eine Eigenschaft aus folgender Gruppe aufweisen:
mehrere unidirektionale Faserschichten aufweisend,
aus mehreren unidirektionalen Faserschichten bestehend,
als Multiaxial-Gelege ausgebildet,
aus einer unidirektionalen Faserschicht bestehend,
als ein Strang zueinander verbunden, wobei die einzelnen 1-/2-dim. Fasergebilde die Strangabschnitte ausbilden und wobei die Faserrichtungen der 1-/2-dim.
Fasergebilde unter einem Winkel >40° zur Längsrichtung des Stranges angeordnet sind.

3. Verfahren nach einem der vorhergehenden Ansprüche,
wobei in beliebiger Reihenfolge, zusätzlich oder alternativ zumindest ein Verfahrensschritt aus folgender Gruppe durchgeführt wird:
die 1-/2-dim. Fasergebilde (110) werden spannungsfrei in Ablegerichtung (120) auf dem Faserträger (140) abgelegt,
die 1-/2-dim. Fasergebilde (110) werden mit einem Bindemittel oder Matrixmaterial derart vorbehandelt, dass sie untereinander haften,
die 1-/2-dim. Fasergebilde (110) werden mit einem Bindemittel oder Matrixmaterial derart vorbehandelt, dass sie an/auf dem Faserträger (140) haften.

4. Verfahren nach einem der vorhergehenden Ansprüche,
wobei der Faserträger (140) zumindest ein Bauteil aus folgender Gruppe aufweist:
eine erste Werkzeughälfte mit einem Oberflächenprofil, das den mit dem Verfahren herstellbaren Faser-Kunststoff-Verbund oder das mit dem Verfahren herstellbare FKV-Halbzeug während eines Konsolidierungsvorganges zumindest teilweise profiliert,
eine Haltevorrichtung, umfassend mehrere Halteelemente, die die auf dem Faserträger (140) abgelegten 1-/2-dimensionalen Fasergebilde (110) positioniert,
wobei die Halteelemente in dem Faserträger (140) versenkt werden können,
eine Saugvorrichtung, mittels der eine, die abgelegten 1-/2-dim. Fasergebilde (110) auf dem Faserträger (140) fixierende, Saugkraft (190) in dem Faserträger (140) erzeugt wird,
eine elektrische Polarisierungsvorrichtung, mittels der eine, die abgelegten 1-/2-dim.
Fasergebilde (110) auf dem Faserträger (140) fixierende, elektrostatische Anziehungskraft erzeugt wird,
eine Heizvorrichtung, die die abgelegten 1-/2-dimensionale Fasergebilde (110) auf eine vorbestimmte Temperatur erwärmt,
zumindest ein erstes Förderband, mittels dem die 1-/2-dim. Fasergebilde (110) nach dem Ablegen in Bandlaufrichtung weitertransportiert werden, wobei die 1-/2-dim. Fasergebilde (110) mittels der Ablegevorrichtung (150) direkt auf das erste Förderband abgelegt werden können und/oder wobei die Bandlaufrichtung von zumindest einem ersten Förderband unter einem vorbestimmten Winkel β zu der Bandlaufrichtung zumindest eines weiteren ersten Förderbandes orientiert ist.

5. Verfahren nach einem der vorhergehenden Ansprüche,
wobei die Ablegevorrichtung (150) zumindest ein Bauteil aus folgender Gruppe aufweist:
eine erste Breitschlitzdüse, mittels der die 1-/2-dim. Fasergebilde (110) auf den Faserträger (140) aufgebracht werden,
eine zweite Breitschlitzdüse, mittels der die 1-/2-dim. Fasergebilde (110) auf ein Bauteil der Ablegevorrichtung (150) aufgebracht werden,
eine Positioniervorrichtung, mittels der die Ablegevorrichtung (150) derart zum Faserträger (140) positioniert werden kann, dass unterschiedliche Winkel α eingestellt werden können,
eine Vortriebsvorrichtung, mittels der die Ablegevorrichtung (150) in Ablegerichtung (120) während des Ablegens voran bewegt wird,
ein Magazin, in dem die 1-/2-dim. Fasergebilde (110) bevorratet sind und aus dem dieselben auf den Faserträger (140) abgestreift werden,
ein Magazin, in dem die 1-/2-dim. Fasergebilde (110) bevorratet sind und aus dem dieselben auf ein Bauteil der Ablegevorrichtung (150) abgestreift werden,
eine elektrische Polarisierungsvorrichtung, mittels der eine, die abgelegten 1-/2-dim.
Fasergebilde (110) auf der Ablegevorrichtung (150) fixierende, elektrostatische Anziehungskraft erzeugt wird,
eine Heizvorrichtung, mittels der die zum Faserträger (140) hin orientierte Oberfläche des jeweiligen abzulegenden 1-/2-dim. Fasergebildes (110) auf eine vorbestimmte Temperatur erwärmt wird,
zumindest ein zweites Förderband (170), mittels dem die 1-/2-dim. Fasergebilde (110) in Bandlaufrichtung zum Ablegen auf den Faserträger (140) transportiert werden, wobei die Bandlaufrichtung von zumindest einem zweiten Förderband (170) unter einem vorbestimmten Winkel δ zu der Bandlaufrichtung zumindest eines weiteren zweiten Förderbandes (170) orientiert ist und/oder wobei die Bandlaufrichtung von zumindest einem zweiten Förderband (170) unter einem vorbestimmten Winkel γ zu der Bandlaufrichtung zumindest eines ersten Förderbandes (170) orientiert ist.

6. Verfahren nach einem der Ansprüche 4 oder 5,
wobei in beliebiger Reihenfolge, zusätzlich oder alternativ zumindest einer der folgenden Verfahrensschritte durchgeführt wird:
ein Einstellen der jeweiligen Haftkräfte derart, dass die jeweilige Haftkraft an der Ablegevorrichtung (150) kleiner ist, als die jeweilige Haftkraft an dem Faserträger (140),
ein Erhöhen der jeweiligen Haftkraft an den Faserträger (140) zum Ablegezeitpunkt und/oder im Ablegebereich.

7. Verfahren nach einem der Ansprüche 1 bis 6,
wobei mittels einer Fixiervorrichtung (160) nach und/oder während des Ablegens der 1-/2-dim. Fasergebilde (110) auf dem Faserträger (140) die 1-/2-dim. Fasergebilde (110) zueinander fixiert werden.

8. Verfahren nach einem der Ansprüche 1 bis 6,
wobei mittels einer Fixiervorrichtung (160) nach und/oder während des Ablegens der 1-/2-dim. Fasergebilde (110) auf dem Faserträger (140) die 1-/2-dim. Fasergebilde (110) auf dem Faserträger (140) fixiert werden.

9. Verfahren nach einem der Ansprüche 7 oder 8,
wobei die Fixiervorrichtung (160) zumindest ein Bauteil aus folgender Gruppe aufweist:
eine zweite (mehrteilige) Werkzeughälfte mit einem zur ersten Werkzeughälfte komplementären Oberflächenprofil, das den mit dem Verfahren herstellbaren Faser-Kunststoff-Verbund oder das mit dem Verfahren herstellbare FKV-Halbzeug während eines Konsolidierungsvorganges (teilweise) profiliert,
eine Pressvorrichtung, mit der die auf dem Faserträger (140) abgelegten 1-/2-dim. Fasergebilde (110) zueinander und/oder auf dem Faserträger (140) durch Verpressen fixiert werden,
zumindest eine Walze der Pressvorrichtung, wobei die Fixierung der auf dem Faserträger (140) abgelegten 1-/2-dim. Fasergebilde (110) zueinander durch Verpressen zwischen der zumindest einen Walzen und dem Faserträger (140) durchgeführt wird, wobei die zumindest eine Walze der Ablegevorrichtung (150) in Ablegerichtung (120) nachfolgend ausgebildet sein kann oder wobei sie eine nachgiebige Oberfläche aufweisen kann,
zumindest zwei Walzen der Pressvorrichtung, wobei die Fixierung der auf dem Faserträger (140) abgelegten 1-/2-dim. Fasergebilde (110) zueinander durch Verpressen zwischen den beiden Walzen durchgeführt wird,
eine Heizvorrichtung (Wärmestrahlung, Heißluft, Vakuum), die die abgelegten 1-/2-dim. Fasergebilde (110) durch Erwärmung auf eine vorbestimmte Temperatur zueinander fixiert,
eine Bestrahlungsvorrichtung, die die abgelegten 1-/2-dim. Fasergebilde (110) durch Bestrahlung zueinander fixiert,
eine Sprühvorrichtung, die die abgelegten 1-/2-dim. Fasergebilde (110) durch Besprühen mit einem Bindemittel oder Matrixmaterial zueinander fixiert.

10. Verfahren nach Anspruch 9,
wobei die Fixiervorrichtung (160) eine Pressvorrichtung mit zumindest einer Walze aufweist, wobei die Walze einen Durchmessser zwischen 10 und 100 mm hat.

11. Verfahren nach Anspruch 5,
wobei die Ablegevorrichtung (150) zumindest eine erste oder zweite Breitschlitzdüse aufweist, welche eine Ablegeöffnung mit einer Breite quer zur Faserrichtung (130) zwischen 1 mm und 20 mm besitzt.

12. Verfahren nach einem der vorhergehenden Ansprüche,
wobei die 1-/2-dim. Fasergebilde (110) seitlich, d.h. quer zur Ablegerichtung (120), alternierend versetzt zueinander auf dem Faserträger (140) abgelegt werden, so dass die jeweiligen Enden der 1-/2-dim. Fasergebilde nicht in einer geraden Linie zu liegen kommen.

13. Verfahren nach einem der vorhergehenden Ansprüche,
wobei mehrere Streifen aus 1-/2-dim. Fasergebilden (110) auf dem Faserträger (140) nacheinander und nebeneinander abgelegt werden.

## Claims

1. Method for depositing 1-/2-dimensional fibre structures (110) in order to form a 2-/3-dimensional fibre structure, in particular constructed as a fibre reinforced plastic (FRP) or FRP semi-finished product, with a production machine, comprising at least one depositing device (150) and at least one fibre support (140), wherein the 1-/2-dimensional fibre structures (110) have at least one unidirectional fibre layer, wherein at least one depositing device (150) deposits the 1-/2-dimensional fibre structures (110) onto at least one fibre support (140) in depositing direction (120) in an ordered manner such that the fibre directions (130) of the deposited 1-/2-dimensional fibre structures (110) assume an angle α>20°, preferably α>60°, and a maximum of α=90° to the depositing direction (120), wherein the 1-/2-dimensional fibre structures (110) are deposited substantially free of tension as regards their fibre direction (130) on the fibre support (140),
**characterized in that**
the depositing device (150) has no direct contact with the fibre support (140), but rather forms therewith a gap having a width between 1 mm and 20 mm,
and wherein the depositing device (150) has a suction device, by means of which a suction force, fixing the 1-/2-dimensional fibre structures (110) on the depositing device (150), is generated in the depositing device, wherein at the moment of depositing and/or in the depositing region the suction force at the depositing device (150) is reduced.

2. Method according to Claim 1,
wherein the 1-/2-dimensional fibre structures (110) have at least one characteristic from the following group:
having a plurality of unidirectional fibre layers,
consisting of a plurality of unidirectional fibre layers,
constructed as a multi-axial laid structure,
consisting of a unidirectional fibre layer,
connected to one another as a strand, wherein the individual 1-/2-dimensional fibre structures form the strand segments and wherein the fibre directions of the 1-/2-dimensional fibre structures are arranged at an angle >40° to the longitudinal direction of the strand.

3. Method according to one of the preceding claims,
wherein in any desired sequence, additionally or alternatively at least one method step of the following group is carried out:
the 1-/2-dimensional fibre structures (110) are deposited free of tension in the depositing direction (120) on the fibre support (140),
the 1-/2-dimensional fibre structures (110) are pre-treated with a binding agent or matrix material such that they adhere to one another,
the 1-/2-dimensional fibre structures (110) are pre-treated with a binding agent or matrix material such that they adhere against/on the fibre support (140).

4. Method according to one of the preceding claims,
wherein the fibre support (140) has at least one component of the following group:
a first tool half with a surface profile which at least partially profiles the fibre reinforced plastic able to be produced by the method or the FRP semi-finished product able to be produced by the method, during a consolidation process,
a holding device, comprising a plurality of holding elements, which positions the 1-/2-dimensional fibre structures (110) deposited on the fibre support (140), wherein the holding elements can be recessed in the fibre support (140),
a suction device, by means of which a suction force (190), fixing the deposited 1-/2-dimensional fibre structures (110) on the fibre support (140), is generated in the fibre support (140),
an electric polarization device, by means of which an electrostatic attractive force is generated, fixing the deposited 1-/2-dimensional fibre structures (110) on the fibre support (140),
a heating device, which heats the deposited 1-/2-dimensional fibre structures (110) to a predetermined temperature,
at least a first conveyor belt, by means of which the 1-/2-dimensional fibre structures (110) are further transported in the direction of belt travel, after having been deposited, wherein the 1-/2-dimensional fibre structures (110) can be deposited by means of the depositing device (150) directly onto the first conveyor belt and/or wherein the direction of belt travel of at least a first conveyor belt is oriented at a predetermined angle β to the direction of belt travel at least of one additional first conveyor belt.

5. Method according to one of the preceding claims,
wherein the depositing device (150) has at least one component from the following group:
a first wide-slot die, by means of which the 1-/2-dimensional fibre structures (110) are applied onto the fibre support (140),
a second wide-slot die, by means of which the 1-/2-dimensional fibre structures (110) are applied onto a component of the depositing device (150),
a positioning device, by means of which the depositing device (150) can be positioned relative to the fibre support (140) such that different angles α can be set,
a propulsion device, by means of which the depositing device (150) is moved forward in the depositing direction (120) during the depositing,
a magazine, in which the 1-/2-dimensional fibre structures (110) are stored and from which these are stripped off onto the fibre support (140),
a magazine, in which the 1-/2-dimensional fibre structures (110) are stored and from which these are stripped off onto a component of the depositing device (150),
an electric polarization device, by means of which an electrostatic attractive force is generated, fixing the deposited 1-/2-dimensional fibre structures (110) on the depositing device (150),
a heating device, by means of which the surface of the respective 1-/2-dimensional fibre structure (110) to be deposited, oriented towards the fibre support (140), is heated to a predetermined temperature,
at least one second conveyor belt (170), by means of which the 1-/2-dimensional fibre structures (110) are transported in the direction of belt travel for depositing onto the fibre support (140), wherein the direction of belt travel of at least one second conveyor belt (170) is oriented at a predetermined angle δ to the direction of belt travel at least of one additional second conveyor belt (170) and/or wherein the direction of belt travel of at least one second conveyor belt (170) is oriented at a predetermined angle γ to the direction of belt travel at least of one first conveyor belt (170).

6. Method according to one of Claims 4 and 5,
wherein in any desired sequence, additionally or alternatively at least one of the following method steps is carried out:
an adjusting of the respective adhesion forces such that the respective adhesion force on the depositing device (150) is smaller than the respective adhesion force on the fibre support (140),
an increasing of the respective adhesion force onto the fibre support (140) at the time of depositing and/or in the depositing region.

7. Method according to one of Claims 1 to 6,
wherein by means of a fixing device (160) after and/or during the depositing of the 1-/2-dimensional fibre structures (110) on the fibre support (140) the 1-/2-dimensional fibre structures (110) are fixed to one another.

8. Method according to one of Claims 1 to 6,
wherein by means of a fixing device (160) after and/or during the depositing of the 1-/2-dimensional fibre structures (110) on the fibre support (140) the 1-/2-dimensional fibre structures (110) are fixed on the fibre support (140).

9. Method according to one of Claims 7 and 8,
wherein the fixing device (160) has at least one component from the following group:
a second (multi-part) tool half with a surface profile complementary to the first tool half, which (partially) profiles the fibre reinforced plastic able to be produced by the method or the FRP semi-finished product able to be produced by the method during a consolidation process,
a compression device, with which the 1-/2-dimensional fibre structures (110) deposited on the fibre support (140) are fixed to one another and/or are fixed on the fibre support (140) by pressing,
at least one roller of the compression device, wherein the fixing of the 1-/2-dimensional fibre structures (110) deposited on the fibre support (140) to one another is carried out by pressing between the at least one roller and the fibre support (140), wherein the at least one roller can be constructed following the depositing device (150) in depositing direction (120) or wherein it can have a flexible surface,
at least two rollers of the compression device, wherein the fixing of the 1-/2-dimensional fibre structures (110), deposited on the fibre support (140), to one another is carried out by pressing between the two rollers,
a heating device (thermal radiation, hot air, vacuum), which fixes the deposited 1-/2-dimensional fibre structures (110) to one another by heating to a predetermined temperature,
a radiation device, which fixes the deposited 1-/2-dimensional fibre structures (110) to one another by radiation,
a spraying device, which fixes the deposited 1-/2-dimensional fibre structures (110) to one another by spraying with a binding agent or matrix material.

10. Method according to Claim 9,
wherein the fixing device (160) has a compression device with at least one roller, wherein the roller has a diameter of between 10 and 100 mm.

11. Method according to Claim 5,
wherein the depositing device (150) has at least a first or second wide-slot die, which has a depositing opening with a width transverse to the fibre direction (130) of between 1 mm and 20 mm.

12. Method according to one of the preceding claims,
wherein the 1-/2-dimensional fibre structures (110) are deposited laterally, i.e. transversely to the depositing direction (120) alternatingly offset to one another on the fibre support (140), so that the respective ends of the 1-/2-dimensional fibre structures do not come to lie in a straight line.

13. Method according to one of the preceding claims,
wherein a plurality of strips of 1-/2-dimensional fibre structures (110) are deposited on the fibre support (140) in succession and adjacent to one another.

## Revendications

1. Procédé pour déposer des structures fibreuses mono-/bidimensionnelles (110) sur une structure fibreuse bi-/tridimensionnelle, constituée en particulier d'un composite plastique renforcé par des fibres (FKV) ou d'un semi-produit en FKV, à l'aide d'une machine de production comprenant au moins un dispositif de dépôt (150) et au moins un support fibreux (140), dans lequel les structures fibreuses mono-/bidimensionnelles (110) présentent au moins une couche fibreuse unidirectionnelle, au moins un dispositif de dépôt (150) déposant, dans la direction du dépôt (120), les structures fibreuses mono-/bidimensionnelles (110) sur au moins un support fibreux (140), arrangées de telle sorte que les directions (130) des fibres des structures fibreuses mono-/bidimensionnelles (110) déposées fassent avec la direction de dépôt (120) un angle α>20°, de préférence α>60°, et au maximum α=90°, les structures fibreuses mono-/bidimensionnelles (110) étant déposées sur le support fibreux (140) pour l'essentiel sans tension pour ce qui est de leur direction des fibres (130),
**caractérisé en ce que** le dispositif de dépôt (150) n'a aucun contact direct avec le support fibreux (140), mais forme avec ce dernier un interstice ayant une largeur comprise entre 1 mm et 20 mm,
et où le dispositif de dépôt (150) comprend un dispositif d'aspiration, à l'aide duquel une force d'aspiration, fixant les structures fibreuses mono-/bidimensionnelles (110) sur le dispositif de dépôt (150), est produite dans la direction du dépôt, la force d'aspiration étant, sur le dispositif de dépôt (150), abaissée à l'instant du dépôt et/ou dans la zone du dépôt.

2. Procédé selon la revendication 1,
dans lequel les structures fibreuses mono-/bidimensionnelles (110) présentent au moins une propriété du groupe suivant :
elles possèdent plusieurs couches fibreuses unidirectionnelles,
elles sont constituées de plusieurs couches fibreuses unidirectionnelles,
elles sont configurées comme une grille multiaxiale,
elles sont constituées d'une couche fibreuse unidirectionnelle,
elles sont reliées les unes aux autres sous forme d'un écheveau, les différentes structures fibreuses mono-/bidimensionnelles formant les segments de l'écheveau, et les directions des fibres des structures fibreuses mono-/bidimensionnelles étant disposées en faisant un angle >40° par rapport à la direction longitudinale de l'écheveau.

3. Procédé selon l'une des revendications précédentes,
dans lequel, dans un ordre quelconque, en plus ou en alternance, au moins une étape de procédé du groupe suivant est mise en oeuvre :
les structures fibreuses mono-/bidimensionnelles (110) sont déposées sans tension dans la direction du dépôt (120) sur le support fibreux (140),
les structures fibreuses mono-/bidimensionnelles (110) sont prétraitées à l'aide d'un liant ou d'un matériau formant matrice, de façon à adhérer les unes aux autres,
les structures fibreuses mono-/bidimensionnelles (110) sont prétraitées avec un liant ou avec un matériau formant matrice, de façon à adhérer au/sur le support fibreux (140).

4. Procédé selon l'une des revendications précédentes,
dans lequel le support fibreux (140) comprend au moins un composant du groupe suivant :
une première moitié de moule, ayant un profil de surface qui au moins partiellement profile pendant une opération de consolidation le composite plastique renforcé par des fibres pouvant être fabriqué par le procédé ou le semi-produit en FKV pouvant être fabriqué par le procédé,
un dispositif de maintien, comprenant plusieurs éléments de maintien, qui positionne les structures fibreuses mono-/bidimensionnelles (110) déposées sur le support fibreux (140), les éléments de maintien pouvant être noyés dans le support fibreux (140),
un dispositif d'aspiration, à l'aide duquel une force d'aspiration (190), qui fixe sur le support fibreux (140) les structures fibreuses mono-/bidimensionnelles déposées (110), est produite dans le support fibreux (140),
un dispositif de polarisation électrique, à l'aide duquel est produite une force d'attraction électrostatique, qui fixe sur le support fibreux (140) les structures fibreuses mono-/bidimensionnelles déposées (110),
un dispositif de chauffage, qui chauffe à une température prédéfinie les structures fibreuses mono-/bidimensionnelles déposées (110),
au moins une première bande transporteuse, à l'aide laquelle les structures fibreuses mono-/bidimensionnelles (110) sont transportées après le dépôt dans la direction de déroulement de la bande, les structures fibreuses mono-/bidimensionnelles (110) pouvant être déposées à l'aide du dispositif de dépôt (150) directement sur la première bande transporteuse, et/ou la direction de déroulement de la bande étant orientée, à partir d'au moins une première bande transporteuse, sous un angle prédéfini β, vers la direction de déroulement de la bande d'au moins une première bande transporteuse supplémentaire.

5. Procédé selon l'une des revendications précédentes,
dans lequel le dispositif de dépôt (150) comprend au moins un composant du groupe suivant :
une première filière plate, à l'aide de laquelle les structures fibreuses mono-/bidimensionnelles (110) sont appliquées sur le support fibreux (140),
une deuxième filière plate, à l'aide de laquelle les structures fibreuses mono-/bidimensionnelles (110) sont appliquées sur un composant du dispositif de dépôt (150),
un dispositif de positionnement, à l'aide duquel il est possible de positionner le dispositif de dépôt (150) par rapport au support fibreux (140) de façon à pouvoir ajuster des angles α différents,
un dispositif d'avancement, à l'aide duquel le dispositif de dépôt (150) peut être déplacé vers l'avant dans la direction du dépôt (120) pendant le dépôt,
un magasin dans lequel sont stockées les structures fibreuses mono-/bidimensionnelles (110), et à partir duquel ces dernières sont éjectées sur le support fibreux (140),
un magasin dans lequel sont stockées les structures fibreuses mono-/bidimensionnelles (110), et à partir duquel ces dernières sont éjectées sur un composant du dispositif de dépôt (150),
un dispositif de polarisation électrique, à l'aide duquel est produite une force d'attraction électrostatique, qui fixe sur le dispositif de dépôt (150) les structures fibreuses mono-/bidimensionnelles déposées (110),
un dispositif de chauffage, à l'aide duquel la surface orientée vers le support fibreux (140) de la structure fibreuse mono-/bidimensionnelle (110) correspondante à déposer, est chauffée à une température prédéfinie,
au moins une deuxième bande transporteuse (170), à l'aide de laquelle les structures fibreuses mono-/bidimensionnelles (110) sont transportées dans la direction de déroulement de la bande pour un dépôt sur le support fibreux (140), la direction de déroulement de la bande étant orientée, à partir d'au moins une deuxième bande transporteuse (170), sous un angle prédéfini δ par rapport à la direction de déroulement de la bande d'au moins une deuxième bande transporteuse supplémentaire (170), et/ou la direction de déroulement de la bande étant orientée, à partir d'au moins une deuxième bande transporteuse (170), sous un angle prédéfini γ, par rapport à la direction de déroulement de la bande d'au moins une première bande transporteuse (170).

6. Procédé selon l'une des revendications 4 ou 5,
dans lequel, dans un ordre quelconque, en plus ou en alternance, au moins l'une des étapes de procédé ci-après est mise en oeuvre :
un ajustement des forces d'adhérence de telle sorte que la force d'adhérence considérée soit, sur le dispositif de dépôt (150), inférieure à la force d'adhérence correspondante sur le support fibreux (140),
une augmentation de la force d'adhérence considérée sur le support fibreux (140), à l'instant du dépôt et/ou dans la zone du dépôt.

7. Procédé selon l'une des revendications 1 à 6, dans lequel les structures fibreuses mono-/bidimensionnelles (110) sont fixées l'une à l'autre à l'aide d'un dispositif de fixation (160), après et/ou pendant le dépôt des structures mono-/bidimensionnelles (110) sur le support fibreux (140).

8. Procédé selon l'une des revendications 1 à 6, dans lequel les structures fibreuses mono-/bidimensionnelles (110) sont fixées sur le support fibreux (140) à l'aide d'un dispositif de fixation (160) après et/ou pendant le dépôt des structures mono-/bidimensionnelles (110) sur le support fibreux (140).

9. Procédé selon l'une des revendications 7 ou 8,
dans lequel le dispositif de fixation (160) comprend au moins un composant du groupe suivant :
une deuxième moitié de moule (en plusieurs parties), ayant un profil de surface complémentaire de celui de la première moitié de moule, profil qui profile (partiellement) pendant une opération de consolidation le composite plastique renforcé par des fibres, pouvant être fabriqué par le procédé, ou le semi-produit en FKV pouvant être fabriqué par le procédé,
un dispositif de pressage, à l'aide duquel les structures fibreuses mono-/bidimensionnelles (110) déposées sur le support fibreux (140) sont fixées par compression les unes aux autres et/ou sur le support fibreux (140),
au moins un cylindre du dispositif de pressage, dans lequel la fixation les unes aux autres des structures fibreuses mono-/bidimensionnelles (110) déposées sur le support fibreux (140) est réalisée par compression entre le ou les cylindres et le support fibreux (140), le ou les cylindres du dispositif de dépôt (150) pouvant être conçus successifs dans la direction du dépôt (120), ou pouvant présenter une surface élastique,
au moins deux cylindres du dispositif de pressage, où la fixation les unes aux autres des structures fibreuses mono-/bidimensionnelles (110) déposées sur le support fibreux (140) est réalisée par compression entre les deux cylindres,
un dispositif de chauffage (rayonnement thermique, air chaud, vide), qui fixe par chauffage à une température prédéfinie les unes aux autres les structures fibreuses mono-/bidimensionnelles déposées (110),
un dispositif d'irradiation, qui fixe les unes aux autres par irradiation les structures fibreuses mono-/bidimensionnelles déposées (110),
un dispositif de pulvérisation, qui fixe les unes aux autres les structures fibreuses mono-/bidimensionnelles déposées (110) par pulvérisation d'un liant ou d'un matériau formant matrice.

10. Procédé selon la revendication 9, dans lequel le dispositif de fixation (160) comprend un dispositif de pressage ayant au moins un cylindre, le cylindre ayant un diamètre compris entre 10 et 100 mm.

11. Procédé selon la revendication 5, dans lequel le dispositif de dépôt (150) comprend au moins une première ou une deuxième filière plate, qui présente une ouverture de dépôt ayant une largeur, perpendiculairement à la direction des fibres (130), comprise entre 1 mm et 20 mm.

12. Procédé selon l'une des revendications précédentes, dans lequel les structures fibreuses mono-/bidimensionnelles (110) sont déposées sur le support fibreux (140) d'une manière latérale, c'est-à-dire perpendiculairement à la direction du dépôt (120), en étant décalées en alternance les unes par rapport aux autres, de telle sorte que les extrémités des différentes structures fibreuses mono-/bidimensionnelles n'en viennent pas à se retrouver sur une ligne droite.

13. Procédé selon l'une des revendications précédentes, dans lequel plusieurs bandes de structures fibreuses mono-/bidimensionnelles (110) sont déposées les unes après les autres et les unes à côté des autres sur le support fibreux (140).
